# EUROPEAN PATENT SPECIFICATION

(11) **EP 1 510 415 B1**
(45) Date of publication and mention of the grant of the patent: **16.05.2007**
(21) Application number: 04005306.8
(22) Date of filing: 05.03.2004
(51) Int. Cl.: B60R 21/20

(54) **Occupant-leg protection device**
Insassenbeinschutzvorrichtung
Dispositif de protection des jambes d'un occupant

(30) Priority: 26.08.2003 JP 2003301608
(43) Date of publication of application: 02.03.2005
(73) Proprietor: TAKATA CORPORATION, Minato-ku, Tokyo 106-8510 (JP)
(72) Inventor: Abe, Kazuhiro, Minato-ku Tokyo 106-8510 (JP)
(74) Representative: Vossius & Partner

(56) References cited:
- US-A- 5 084 122
- PATENT ABSTRACTS OF JAPAN vol. 0072, no. 17 (M-245), 27 September 1983 (1983-09-27) -& JP 58 110338 A (TOYOTA JIDOSHA KOGYO KK), 30 June 1983 (1983-06-30)
- PATENT ABSTRACTS OF JAPAN vol. 2003, no. 06, 3 June 2003 (2003-06-03) -& JP 2003 040069 A (TOYODA GOSEI CO LTD), 13 February 2003 (2003-02-13)

## Description

The present invention relates to an occupant-leg protection device for protecting lower legs of an occupant from hitting against an interior panel in front of a seat in a vehicle collision.

An occupant-leg protection device for protecting lower legs of an occupant from hitting against an interior panel in front of a seat in a collision of a high-speed moving object such as a vehicle includes a device mainly including an airbag disposed inside the interior panel (a space on the reverse side of the interior panel), a gas generator for inflating the airbag, and a cover for covering the airbag at an ordinary time (when the high-speed moving object such as the vehicle does not encounter a collision).

In such an occupant-leg protection device, at an ordinary time, the airbag is arranged inside the interior panel in a folded state, and the cover is attached so as to cover the folded airbag therewith.

Then, in a collision, the gas generator is operated to inject gas which is in turn supplied to the airbag so that the airbag is rapidly inflated. With inflation of the airbag, the cover is opened so as to allow the airbag to expand outside the interior panel and to inflate and develop between the interior panel and occupant lower legs for protecting the occupant lower legs from hitting against the interior panel.

JP-A-2003-40069 discloses that the cover is provided with a break-predestined section downwardly U-shaped and extending along lateral edges and the upper edge of the cover while being provided with a hinge extending along the lower edge of the cover. When the airbag is inflated, the cover breaks along the break-predestined section so as to form a flap. The flap is downward rotated and opened about the hinge as a rotation axis so that the airbag develops in front of the occupant lower legs.

In the occupant-leg protection device according to JP-A-2003-40069, since the flap is large, the momentum of the flap is large during the rotation. Therefore, when the rotating flap comes in contact with an occupant leg, the impact is rather large. US 5 084 122 A and JP 58 110 338 A disclose an occupant-leg protection device according to the preamble of claim 1.

It is an object of the present invention to provide an occupant-leg protection device with small impact produced when a rotating flap comes in contact with an occupant leg.

The present invention provides an occupant-leg protection device having the features of claim 1.

According to the present invention, the break-predestined section may preferably form four or more laterally arranged flaps.

According to the present invention, the break-predestined section may also form a flap to be upward opened and a flap to be downward opened.

In an occupant-leg protection device according to the present invention, since a plurality of laterally arranged flaps are formed when an airbag is inflated, each flap weighs small. Therefore, each kinetic momentum is small so that the impact applied to an occupant leg becomes small when the rotating flap hits at the occupant leg.

If four or more flaps are laterally formed, this impact is further reduced. Also, when a flap to be upward opened and a flap to be downward opened are formed, the impact is further reduced.

An embodiment according to the present invention will be described below with reference to the drawings.
Fig. 1 is a longitudinal sectional view (sectional view at the line I-I of Fig. 2) of an occupant-leg protection device according to an embodiment of the present invention; Fig. 1(a) shows a non-inflation state of an airbag; and Fig. 1(b) shows an inflated state of the airbag;
Fig. 2 is a plan view of the reverse surface of an interior panel showing a cover section;
Fig. 3 is a perspective view showing the interior panel when the cover section starts opening;
Fig. 4 is a plan view of the reverse surface of the interior panel showing another example of the cover section;
Fig. 5 is a plan view of the reverse surface of the interior panel showing still another example of the cover section; and
Fig. 6 is a plan view of the reverse surface of the interior panel showing further another example of the cover section.

An occupant-leg protection device 1 includes a container-like retainer 2 having an opening formed on the front surface (surface adjacent to an occupant), an airbag 4 arranged and folded inside the retainer 2, and a gas generator 6 for inflating the airbag 4, and is covered with an interior panel 10 in which the front opening of the retainer 2 is located in front of a front passenger seat. Reference numeral 2a denotes a bracket fixed to a vehicle body member (not shown). In the interior panel 10, a section covering the front opening of the retainer 2 is a cover region (referred to as a cover section below) 11 to be opened when the airbag 4 inflates.

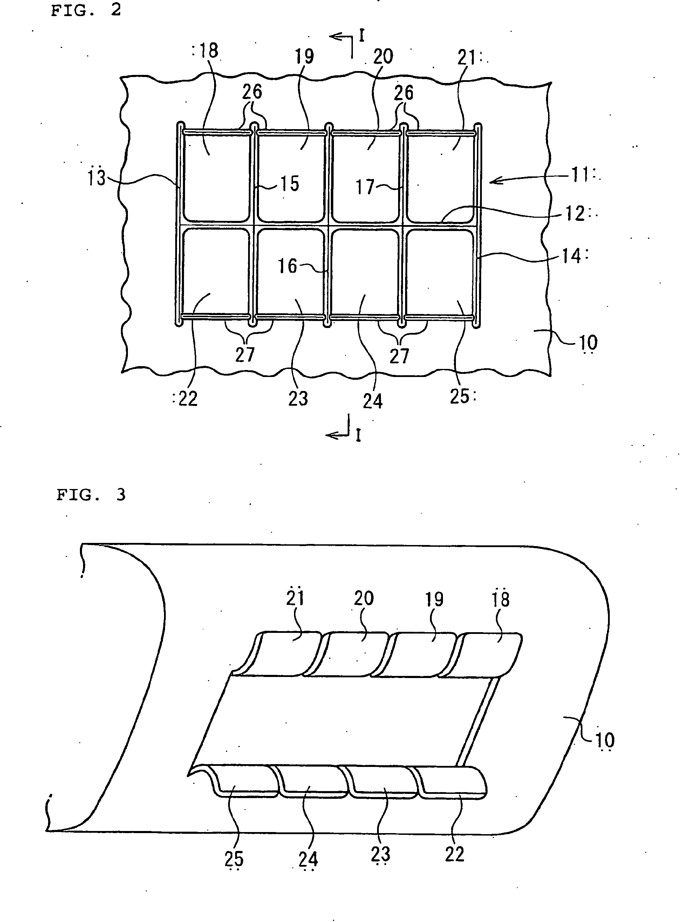

The cover section 11, as shown in Fig. 2, includes break-predestined sections that are a center tear line 12 formed in the vicinity of the vertical intermediate position of the cover section 11 and extending in the lateral direction (vehicle width direction), first and second vertical tear lines 13 and 14 extending in the vertical direction respectively along left and right sides of the cover section 11, and third, fourth, and fifth vertical tear lines 15, 16, and 17 extending in the vertical direction in parallel with each other between the first and second vertical tear lines 13 and 14. The first and second vertical tear lines 13 and 14 are connected to left and right ends of the center tear line 12 in the vicinities of the intermediate positions thereof, respectively. The vicinities of the intermediate positions of the third to fifth vertical tear lines 15 to 17 intersect at positions in the halfway of the center tear line 12, respectively.

These tear lines 12 to 17 are concave grooves formed on the reverse surface of the cover section 11, and are fragile sections with a small panel thickness along therewith. Therefore, when the airbag 4 is inflated, the cover section 11 breaks along these tear lines 12 to 17 by a pressure force from the airbag 4 so as to open toward an occupant in flap shapes.

According to the embodiment, as shown in Fig. 2, the cover section 11 is zoned by these tear lines 12 to 17 into four above regions and four below, eight regions in total. Therefore, when the cover section 11 breaks along these tear lines 12 to 17 during the inflation of the airbag, eight flaps 18, 19, 20, 21, 22, 23, 24, and 25 are formed in total.

According to the embodiment, each of the flaps 18 to 25 is provided with a hinge (bending induction part) 26 or 27 formed on the base. The hinges 26 and 27 are linear fragile concave grooves, with a depth smaller than those of the tear lines 12 to 17, extending in the horizontal direction so as to respectively connect the upper ends and the lower ends of the vertical tear lines 13 to 17 together. The flaps 18 to 25 are pressurized by the airbag 4 inflating toward the surface of the interior panel 10 so as to open toward an occupant by bending from the hinges on the bases. At this time, the flaps 18, 19, 20, and 21 are upward rotated about the upper hinge 26 as a rotation axis while the flaps 22, 23, 24, and 25 are downward rotated about the lower hinge 27 as a rotation axis.

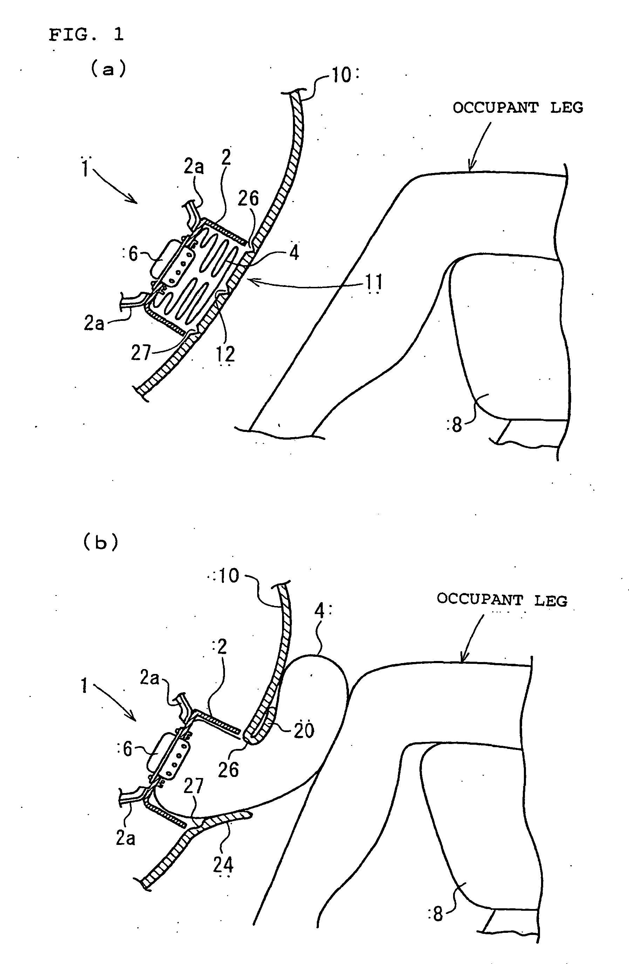

In the occupant-leg protection device 1 structured in such a manner, in a vehicle collision, the gas generator 6 is operated to inject gas which in turn starts inflating the airbag 4 so as to open the cover section 11 of the interior panel 10 for pushing the inflating airbag 4 outside the surface of the interior panel 10. Then, as shown in Fig. 1(b), the inflated airbag 4 receives occupant legs so as to prevent the occupant legs from hitting against the interior panel 10.

In the occupant-leg protection device 1, as shown in Fig. 3, by the inflating airbag 4, the cover section 11 is broken into eight flaps that are the four flaps 18 to 21, which are upward opened from the vicinity of the center in the vertical direction, and the four flaps 22 to 25, which are downward opened therefrom. Accordingly, each of the flaps 18 to 25 weighs small so as to reduce each kinetic momentum at the beginning of opening. Therefore, in the case where the occupant legs are located extremely close to the interior panel 10 when an occupant is seated forward on the front passenger seat 8 or when an occupant is seated on the front passenger seat 8 which is moved toward the vehicle front, for example, the impact applied to the occupant leg becomes small even when any of the flaps 18 to 25 hits at the occupant leg along the opening way.

According to the present invention, the structures, such as the shape of the cover section, the number and shape of the flaps formed by breaking of the cover section during the airbag inflation, and the opening direction, are not limited to the structures shown in Figs. 1 to 3, and various modifications may be made.

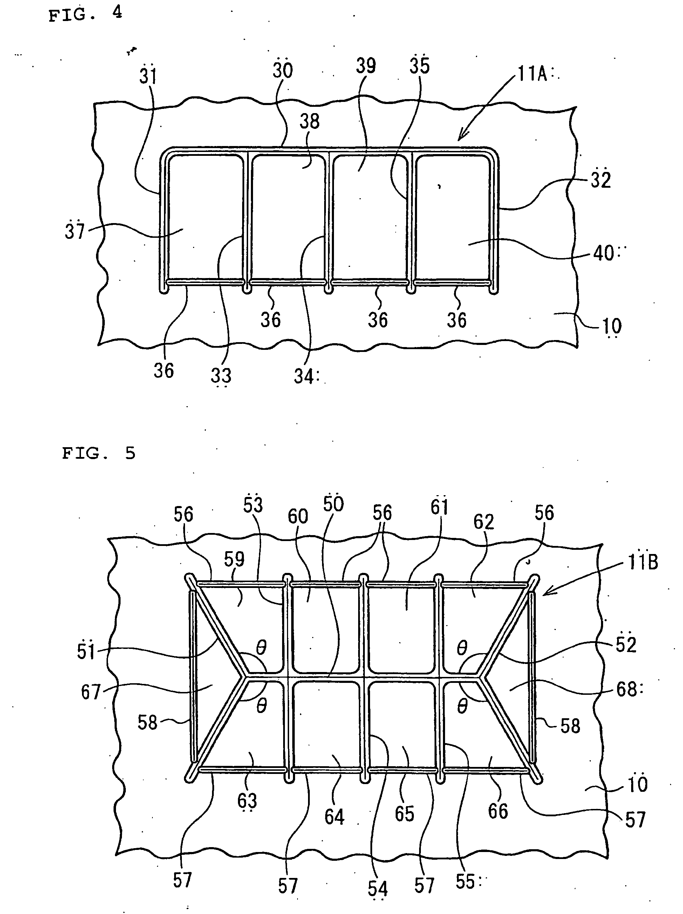

For example, a cover section 11A shown in Fig. 4 includes break-predestined sections that are a horizontal tear line 30 extending in the lateral direction along the upper side of the cover section 11A, first and second vertical tear lines 31 and 32 extending in the vertical direction respectively along left and right sides of the cover section 11A, and third, fourth, and fifth vertical tear lines 33, 34, and 35 extending in the vertical direction in parallel with each other between the first and second vertical lines 31 and 32. The first and second vertical tear lines 31 and 32 are connected to left and right ends of the horizontal tear line 30 at the upper ends thereof, respectively. The upper ends of the third to fifth vertical tear lines 33 to 35 are connected to the halfway of the horizontal tear line 30. Also, a hinge 36, which is a concave groove shallower than those of these tear lines, extends in the horizontal direction along the lower side of the cover section 11A so as to connect the lower ends of the vertical tear lines 31 to 35 together.

That is, the cover section 11A, as shown in the drawing, is zoned by these tear lines 30 to 35 and the hinge 36 into four regions. Therefore, the cover section 11A breaks along these tear lines 30 to 35 by a pressure force from the airbag 4 during the inflation of the airbag 4 (not shown in Fig. 4) so as to form four flaps 37, 38, 39, and 40 in total. These flaps 37 to 40 are downward opened by bending from the hinge 36 at the respective lower ends.

Also, in this cover section 11A, since the cover section 11A is divided into the four flaps 37 to 40, each of the flaps 37 to 40 weighs small so as to also reduce each kinetic momentum at the beginning of opening. Therefore, the impact applied to the occupant leg becomes small even when any of the flaps 37 to 40 hits at the occupant leg along the opening way.

A cover section 11B shown in Fig. 5 includes break-predestined sections that are a center tear line 50 formed in the vicinity of the vertical intermediate position of the cover section 11B and extending in the lateral direction, first and second vertical tear lines 51 and 52 extending in the substantially vertical direction respectively on left and right both sides of the center tear line 50, and third, fourth, and fifth vertical tear lines 53, 54, and 55 extending in the vertical direction in parallel with each other between the first and second vertical tear lines 51 and 52. The first and second vertical tear lines 51 and 52 are connected, in the vicinities of the intermediate positions thereof, to the left and right ends of the center tear line 50, respectively. The vicinities of the intermediate positions of the third to fifth vertical tear lines 53 to 55 intersect at positions in the halfway of the center tear line 50, respectively.

According to this structure, in the respective first and second vertical tear lines 51 and 52, the upper half section and the lower half section extend in directions intersecting with the center tear line 50 from the vicinity of each intermediate position, respectively, while any intersecting angle θ of each section with the center tear line 50 is an obtuse angle. The remaining third to fifth vertical tear lines 53 to 55 extend linearly in the vertical direction so as to orthogonally cross the center tear line 50. Alternatively, the third to fifth vertical tear lines 53 to 55 may extend in directions intersecting with the center tear line 50.

In order to respectively connect the upper ends and the lower ends of the vertical tear lines 51 to 55 together, hinges 56 and 57, which are concave grooves shallower than those of these vertical tear lines, are provided to extend in the horizontal direction respectively along the upper and lower sides of the cover section 11B. Also, hinges 58 and 58, which are shallow concave grooves identical to those of the hinges 56 and 57, are provided to extend in the vertical direction respectively along the left and right sides of the cover section 11B so as to respectively connect the upper and lower ends of the first vertical tear line 51 together and the upper and lower ends of the second vertical tear line 52 together.

That is, according to this structure, the cover section 11B, as shown in the drawing, is zoned by these tear lines 50 to 55 and the hinges 56 to 58 into ten regions in total. Therefore, the cover section 11B breaks along these tear lines 50 to 55 by a pressure force from the airbag 4 during the inflation of the airbag 4 (not shown in Fig. 5) so as to form ten flaps 59, 60, 61, 62, 63, 64, 65, 66, 67, and 68 in total. The flaps 59 to 62 are upward opened by bending from the hinge 56 at the respective upper ends while the flaps 63 to 66 are downward opened by bending from the hinge 57 at the respective lower ends. Also, the flaps 67 and 68 are laterally opened by bending from the left hinge 58 and the right hinge 58, respectively.

Also, in this cover section 11B, since the cover section 11B is divided into the ten flaps 59 to 68, each of the flaps 59 to 68 weighs small so as to also reduce each kinetic momentum at the beginning of opening. Therefore, the impact applied to the occupant leg becomes small even when any of the flaps 59 to 68 hits at the occupant leg along the opening way.

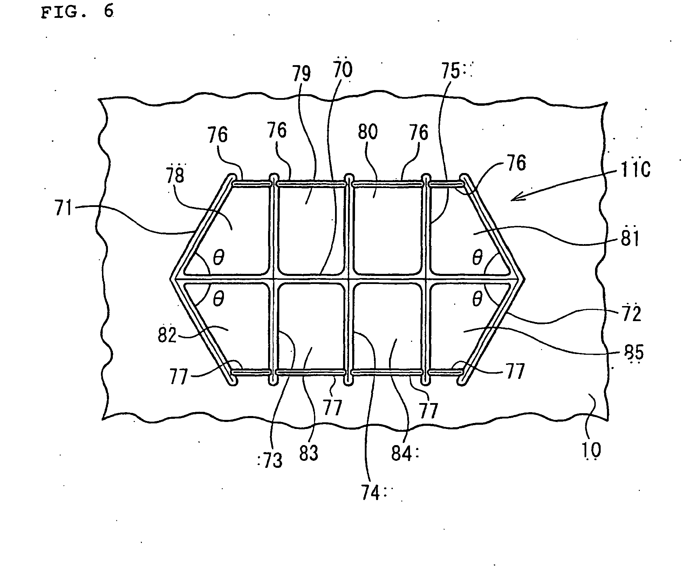

A cover section 11C shown in Fig. 6 includes break-predestined sections that are a center tear line 70 formed in the vicinity of the vertical intermediate position of the cover section 11C and extending in the lateral direction, first and second vertical tear lines 71 and 72 extending in the substantially vertical direction respectively on left and right both ends of the center tear line 70, and third, fourth, and fifth vertical tear lines 73, 74, and 75 extending in the vertical direction in parallel with each other between the first and second vertical tear lines 71 and 72. The first and second vertical tear lines 71 and 72 are connected, in the vicinities of the intermediate positions thereof, to the left and right ends of the center tear line 70, respectively. The vicinities of the intermediate positions of the third to fifth vertical tear lines 73 to 75 intersect at positions in the halfway of the center tear line 70, respectively.

According to this structure, in the respective first and second vertical tear lines 71 and 72, as shown in the drawing, the upper half section and the lower half section extend in directions intersecting with the center tear line 70 from the vicinity of each intermediate position, respectively, while any intersecting angle θ of each section with the center tear line 50 is an acute angle. The remaining third to fifth vertical tear lines 73 to 75 extend linearly in the vertical direction so as to orthogonally cross the center tear line 70. Alternatively, the third to fifth vertical tear lines 73 to 75 may extend in directions intersecting with the center tear line 70.

In order to respectively connect the upper ends and the lower ends of the vertical tear lines 71 to 75 together, hinges 76 and 77, which are concave grooves shallower than those of these vertical tear lines, are provided to extend in the horizontal direction respectively along the upper and lower sides of the cover section 11C.

That is, according to this structure, the cover section 11C, as shown in the drawing, is zoned by these tear lines 70 to 75 and the hinges 76 to 77 into eight regions in total. Therefore, the cover section 11C breaks along these tear lines 70 to 75 by a pressure force from the airbag 4 during the inflation of the airbag 4 (not shown in Fig. 6) so as to form eight flaps 78, 79, 80, 81, 82, 83, 84, and 85 in total. The flaps 78 to 81 are upward opened by bending from the hinge 76 at the respective upper ends while the flaps 82 to 85 are downward opened by bending from the hinge 77 at the respective lower ends.

Also, in this cover section 11C, since the cover section 11C is divided into the eight flaps 78 to 85, each of the flaps 78 to 85 weighs small so as to also reduce each kinetic momentum at the beginning of opening. Therefore, the impact applied to the occupant leg becomes small even when any of the flaps 78 to 85 hits at the occupant leg along the opening way.

Any of the structures described above shows an example of the present invention, and the present invention is not limited to the above structures.

For example, in the above structures, the cover section covering the front opening of the retainer is integrally formed with the interior panel; alternatively, the cover may be provided separately from the interior panel.

## Claims

1. An occupant-leg protection device comprising:
- an airbag (4) arranged inside a member (10) disposed in front of a seat,
- a gas generator (6) for inflating the airbag, and
- a cover (11;11A;11B;11C) for covering the airbag so as to open when the airbag is inflated, wherein
the cover is provided with a break-predestined section comprising tear lines (12-17; 30-35; 50-55; 70-75) so as to break along the tear lines for forming a plurality of laterally arranged flaps (18-25; 37-40; 59-68; 78-85) when the airbag is inflated,
the tear lines are formed as concave grooves **characterized in that** each of the flaps is provided with a hinge (26, 27; 36; 56-58; 76, 77) formed as a linear concave groove and having a depth smaller than that of the tear lines.

2. A device according to claim 1, wherein the break-predestined section forms at least four laterally arranged flaps.

3. A device according to claim 1 or 2, wherein the break-predestined section forms a flap to be upward opened and a flap to be downward opened.

## Patentansprüche

1. Insassenbeinschutzvorrichtung mit:
- einem Airbag (4), der in einem vor einem Sitz vorgesehenen Element (10) angeordnet ist,
- einem Gasgenerator (6) zum Aufblasen des Airbags und
- einer Abdeckung (11; 11A; 11B; 11C) zum Abdecken des Airbags, die sich öffnet, wenn der Airbag aufgeblasen ist, wobei
die Abdeckung mit einem Sollbruchbereich versehen ist, welcher Aufreißlinien (12-17; 30-35; 50-55; 70-75) aufweist, um so entlang den Aufreißlinien aufzubrechen, um mehrere seitlich angeordnete Klappen (18-25; 37-40; 59-68; 78-85) auszubilden, wenn der Airbag aufgeblasen wird,
die Aufreißlinien als konkave Aussparungen ausgebildet sind,
**dadurch gekennzeichnet, dass**
jede der Klappen mit einem Scharnier (26, 27; 36; 56-58; 76, 77) versehen ist, das als eine geradlinige konkave Aussparung und mit einer geringeren Tiefe als die der Aufreißlinien ausgebildet ist.

2. Vorrichtung nach Anspruch 1, wobei der Sollbruchbereich mindestens vier seitlich angeordnete Klappen ausbildet.

3. Vorrichtung nach Anspruch 1 oder 2, wobei der Sollbruchbereich eine Klappe zum Öffnen nach oben und eine Klappe zum Öffnen nach unten ausbildet.

## Revendications

1. Un dispositif de protection des jambes d'un occupant, comprenant :
- un sac gonflable de sécurité (4) agencé à l'intérieur d'un organe (10) disposé à l'avant d'un siège,
- un générateur à gaz (6) pour gonfler le sac gonflable de sécurité, et
- un couvercle (11 ; 11A ; 11B ; 11C) pour couvrir le sac gonflable de sécurité pour qu'il s'ouvre lorsque le sac gonflable de sécurité est gonflé, dans lequel
le couvercle est muni d'une section prédestinée à la rupture comprenant des lignes de déchirement (12 à 17 ; 30 à 35 ; 50 à 55 ; 70 à 75) de manière à se rompre le long des lignes de déchirement pour former une pluralité de volets (18 à 25 ; 37 à 40 ; 59 à 68 ; 78 à 85) agencés latéralement lorsque le sac gonflable de sécurité est gonflé,
les lignes de déchirement sont formées sous forme de parties concaves, **caractérisé en ce que** chacun des volets est muni d'une charnière (26, 27 ; 36 ; 56 à 58 ; 76, 77) formée sous forme de gorge concave linéaire et ayant une profondeur inférieure à celle des lignes de déchirement.

2. Un dispositif selon la revendication 1, dans lequel la section prédestinée à la rupture forme au moins quatre volets agencés latéralement.

3. Un dispositif selon la revendication 1 ou 2, dans lequel la section prédestinée à la rupture forme un volet devant s'ouvrir en se déplaçant par un mouvement vers le haut et un volet devant s'ouvrir en se déplaçant par un mouvement vers le bas.
